# EUROPEAN PATENT APPLICATION

(11) **EP 4 576 461 A1**
(43) Date of publication of application: **25.06.2025**
(21) Application number: 24220558.1
(22) Date of filing: 17.12.2024
(51) Int. Cl.: H02G 3/08, H02G 3/12, H02G 3/14

(54) **ELECTRICAL INSTALLATION SYSTEM**

(30) Priority: 18.12.2023 SE 2351444
(71) Applicant: Kazakoff Design AB, 113 31 Stockholm (SE)
(72) Inventor: KAZAKOV, Igor, SE-113 31 STOCKHOLM (SE); KAZAKOV, Filip, SE-118 55 STOCKHOLM (SE); KAZAKOV, Alexander, SE-113 31 STOCKHOLM (SE)
(74) Representative: Groth & Co. KB

(57) **Abstract**

Electrical installation system for installation into an opening of an installation wall (1). The system comprises a main part (2) and a cover part (3). The main part includes a plate portion (4) designed to fit with its rear side in contact with the exterior side of the installation wall and an electrical module (5) such as an electrical receptacle or a light switch/dimmer, which is fixedly attached to the plate portion in a through opening, with a front side (5a) of the electrical module user-accessible from a front side of the plate portion (4). The electrical module includes electrical insulation to electrically insulate the front side (5a) of the electrical module. The main part (2) and the cover part (3) can be connected and disconnected by a first fastening mechanism (6a, 6b). The cover part (3) is substantially plate-shaped and has a through opening (3a) to provide user access to the electrical module (5) when the cover part is fitted to the main part.

## Description

### TECHNICAL FIELD OF INVENTION

The present invention pertains to the technical field of electrical installation systems for installation into an opening of an installation wall. The electrical installation system may comprise an electrical receptacle, a light switch/dimmer, a display, a light source, or an electrical interface.

### BACKGROUND OF INVENTION

Traditional electrical installation systems typically comprise: a wall box, a main part with a plate portion and a thereto attached electrical module such as a receptacle or a switch, and a faceplate. The wall box, usually made of plastic, encases parts of the electrical module within the wall cavity, providing installation support and insulation. The plate portion is secured to the wall box or wall. Finally, the faceplate covers the entire assembly, offering insulation, securing the components, and providing a clean aesthetic finish.

Despite their widespread use, these systems face several challenges. One significant issue is the bulkiness and protrusion of components beyond the wall surface, which can be aesthetically displeasing and impractical in certain environments. Installation complexity is another concern, often requiring skilled labor to align and attach multiple components. The use of screws and releasable connections in these systems can lead to durability issues over time, necessitating maintenance or replacements. Lastly, the visible screws and limited design options due to functional requirements often constrain the aesthetic appeal of these systems.

The state of the art in the field of electrical installation systems includes various attempts to facilitate installation and decrease the extension of the electrical installation from the exterior of the installation wall as to provide a more aesthetic look. An example of such prior art is disclosed in EP2690728B1 which discloses an electrical installation system which aims to reduce the protrusion from the wall. Furthermore, installation is simplified due to a novel design of the fastening elements resulting in that the assembly of the wall box and plate portion only requiring two screws as opposed to the traditional four screws.

However, the solutions suggested in EP2690728B1 results in a number of challenges, such limitations in robustness due to the electrical module and faceplate being attached to the plate portion via snap connections. Furthermore, the electrical module protrudes from the plate portion and thus from the installation wall.

### SUMMARY OF INVENTION

The present invention relates to an electrical installation system the object of which is to ensure robustness, longevity, and aesthetic appeal by providing installation of various electrical modules such as wall sockets, switches, and electrical interfaces with a minimal protrusion from the wall.

The proposed electrical installation system is designed for installation into a substantially circular opening in an installation wall, which installation wall has an exterior side and a cavity side. This system comprises a main part and a cover part. The main part includes a plate portion that is adapted to be fitted with its rear side in abutment with the exterior side of the installation wall. The main part also comprises an electrical module for electrical connection, electrical switching, user interaction or illumination. The electrical module may include at least one of the following elements: an electrical receptacle, a light switch/dimmer, a display, a light source, and/or an electrical interface. This electrical module is fixedly attached to the plate portion in a through opening thereof, such that the front side of the electrical module is user-accessible from the front side of the plate portion.

An electrical installation system being adapted to be installed in a substantially circular opening in the installation wall is advantageous since a circular opening can be made (using a hole saw for example) much more quickly than for example a rectangular opening.

The electrical installation system may further comprise a wall box adapted to be installed in the substantially circular the opening of the installation wall and extend into the cavity side. The wall box may be substantially cylindrical or may at least comprise a cylindrical portion. The wall box may have an outer diameter (installation diameter) equal to or slightly smaller than the diameter of the opening. The diameter of the opening in the installation wall (and/or of the wall box) may be in the range 70-76 mm, such as 74 mm (which is obtainable using a standard T70 hole saw). The wall box may conform to one or more of Swedish standards SS 430 06 17/18/19 or a corresponding standard. The electrical installation system may alternatively not comprise a wall box, but may be adapted to be fitted into such a wall box, which may be an existing wall box of the above-described diameter or according to any of the above-mentioned standards.

A unique aspect of the present invention is that the electrical module itself comprises electrical insulation arranged to electrically insulate at least the front side of the electrical module and that the main part is adapted so that the front side of the electrical module does not protrude beyond the front side of the plate portion and/or does not protrude beyond the (front side of) the cover part.

The electrical insulation may be provided by means of a front portion on the electrical module made of plastic material and/or any other suitable insulating material, such as a high-grade polymer layer, designed to provide high dielectric strength and resist environmental degradation. The electrical insulation means is preferably adapted for user interaction. How it is adapted depends on what electrical element the electrical module is. For example, if the electrical element is a receptable, e.g. a wall socket, adapted for user interaction entail providing some sort of recess or other means for securing the connection between the wall socket and a plug. Alternatively, if the electrical element is a display the electrical insulation means may be adapted for user interaction by providing the screen with a cover to protect the screen against physical tear. Independent of which kind of electrical element is included, an adaption of the electrical insulation means may also entail mitigating the risk of dirt entering the main part or the wall cavity as well as providing an aesthetic look to the electrical installation system.

The main part and the cover part are designed to be releasably connectable to each other by means of a first fastening mechanism. Furthermore, the cover part is substantially plate-shaped and is provided with a through opening to allow user access to the electrical module when the cover part is fitted to the main part. The inventive fixed attachment between the plate portion and the electrical model combined with the through opening of the plate portion and insulated first side of the electrical model enables for a design with no visible screws post installation while still providing a robust solution able to withstand wear and tear.

The first fastening mechanism may be positioned, when viewed in a lateral direction parallel with the plate portion, within the lateral/radial extension of the through hole in the plate portion. Positioning the first fastening mechanism within the lateral extension of the through opening in the plate portion contributes to a convenient installation of the system - since the first fastening mechanism does not extend beyond the lateral extension of the through opening of the plate portion, no additional holes need to made in the installation wall for the first fastening mechanism (in addition to the hole needed to accommodate the electrical module fitted in the through opening and protruding into the wall). Furthermore, a compact and integrated design is achieved. Furthermore, this positioning can also provide enhanced mechanical strength and stability to the fastening mechanism, ensuring a secure attachment of the components.

In embodiments, the through opening in the plate portion may be substantially circular. The diameter of the through opening may be described as adapted to (slightly smaller than) the diameter of the circular opening in the wall and/or an inner diameter of the wall box. The electrical module, which is fitted in/attached to the through opening of the plate portion, may have a diameter/lateral extension which corresponds to that of the through opening.

In embodiments, the plate portion may be provided with one or more flanges extending around at least part of the circumference of the through opening. The flange(s) advantageously do not protrude beyond the front side of the plate portion. The flange(s) may be substantially perpendicularly arranged relative the front/rear sides of the plate portion. The electrical module may be attached to the flange(s) (for example by means of injection molding) to be securely fixed to the plate portion. The outer diameter/lateral extension of the flange(s) may be described as adapted to (slightly smaller than) the diameter of the circular opening in the wall and/or an inner diameter of the wall box. The portion of the main part which extends into the installation wall/wall box thus has a diameter/lateral extension which is that of the flange(s).

A key technical advantage of this system is its flush installation capability, enabling the electrical modules to be installed almost in line with the wall surface with minimum protrusion. The electrical module's non-protruding design, combined with its insulation, allows the cover part to be exceptionally thin, such as 2 mm or less. The inventive fixed attachment between the plate portion and the electrical module combined with the through opening of the plate portion and insulated first side of the electrical model enables for a design with no visible screws post installation while still providing a robust solution able to withstand wear and tear. Consequently, this design not only enhances durability and longevity but also significantly improves the aesthetic appeal of the installation by eliminating visible screws.

In an embodiment, the electrical installation system further includes a wall box that is designed to be arranged in the opening of the installation wall and extend into the cavity side. This wall box features a first opening on its front side, which is adapted to at least partly receive the electrical module of the main part. Furthermore, the main part and the wall box can be connected using a second fastening mechanism, which might comprise screws or any other kind of fastening mechanism known to the skilled person. The wall box includes at least one securing unit designed to prevent movement of the wall box towards the exterior side of the installation wall. The securing unit(s) may include a rear anchoring mechanism that grips the interior wall structure, preventing forward movement. An alternative securing method uses a spring-loaded clamp system that adjusts to the wall thickness, providing a secure fit. It is also adapted to fit flush with the exterior side of the installation wall and to cooperate with the plate portion of the main part to prevent movement of both the main part and the wall box towards the cavity side. In one version of this embodiment the wall box does not have any lateral protrusion on its front side for abutment against the exterior side of the installation wall, as is normally provided in prior art wall boxes for preventing movement of the wall box into the wall (towards the cavity side of the wall).

In another embodiment, the electrical installation system is adapted for retrofitting to a previously installed wall box. This previously installed wall box has a first opening on its front side, which is designed to at least partly receive the electrical module of the main part. The main part of the system is adapted to be connected to this previously installed wall box using a second fastening mechanism. This fastening mechanism is preferably designed to be compatible with a variety of wall box designs, ensuring a tight and secure fit.

To retrofit the installation system the following method is proposed:
1. Securing the main part to the wall box using the second fastening mechanism, ensuring the main part is securely attached to the existing wall box.
2. Once the main part is securely fitted into the existing wall box, the cover part is attached using the first fastening mechanism.

The option to retrofit the installation system to an existing wall box increases versatile application, allowing for upgrades or replacements without the need for complete overhaul of existing installations. Furthermore, it offers increased cost-efficiency as it reduces the need for purchasing and installing entirely new systems.

The electrical installation system may be adapted to be fitted to existing wall boxes/apparatus boxes of standardized dimensions such as 74 mm diameter.

In an embodiment, the first fastening mechanism is designed such that no screws are visible once the system is installed. Designing the first fastening mechanism so that no screws are visible post-installation enhances the visual appeal of the installation while also minimizing the risk of tampering or accidental detachment.

In yet another embodiment, the first fastening mechanism is based on friction contact between the main part and the cover part. In one version of this embodiment, friction-based fastening is created by substantially smooth surfaces of prongs interacting with one or more openings in the main part. In another version, not shown, the friction-based fastening utilizes interlocking textured surfaces, or rough surfaces, on both the main part and the cover part to create a secure yet adjustable connection. Friction-based fastening allows for easy adjustments or maintenance without the need for specialized tools, making the system user-friendly. A friction fastening mechanism can also provide better resistance to vibrations, reducing the risk of components loosening over time.

In another embodiment the electrical module comprises an interaction part which is positioned on the first side of the electrical module. This positioning ensures that the through opening of the cover part provides access to the interaction part. The interaction part could for example be a touch-sensitive switch or a rotatable dimmer control. The purpose of the interaction part is to facilitate access to for example a switch by enabling for the switch to extend from the plate portion, thereby facilitating for a user to identify the switch by feel in a dark room. Ensuring that the interaction part of the electrical module is accessible through the cover part's opening enhances user convenience, making it easier to operate or interact with the system. Positioning the interaction part in this manner also protects the other components of the electrical module, as it limits direct exposure to external elements.

In embodiments, the cover part has a thickness of 3 mm or less, such as 2 mm or less. The cover part may have a greater lateral extension or diameter than the plate portion of the main part such that it covers the plate portion as seen from the front. Further, the cover portion may be provided with a circumferential protrusion on a rear side thereof, the circumferential protrusion surrounding the plate portion when the cover part is connected to the main part. The protrusion may have a height/depth approximately equal to or greater than to the thickness of the plate portion such that the protrusion is in abutment with the exterior side of the installation wall when installed. This means that the overall building depth of the installation system is equal to the thickness of the cover part, i.e. substantially thinner than known electrical installation systems.

In conclusion, the proposed electrical installation system offers a unique combination of robustness, longevity, and aesthetic appeal by allowing flush installation of various electrical modules while ensuring ease-of-use during operation.

The features of the embodiments described above are combinable in any practically realizable way to form embodiments having combinations of these features.

### BRIEF DESCRIPTION OF THE DRAWINGS

Above discussed and other aspects of the present invention will now be described in more detail using the appended drawings, which show presently preferred embodiments of the invention, wherein:
fig. 1 shows a cross-section side view of an embodiment of the electrical installation system installed in an installation wall;
fig. 2a shows a front view of the main part of the embodiment in fig. 1;
fig. 2b shows a front view of the plate portion of the main part in fig. 2a;
fig. 2c shows a side view of the plate portion in fig. 2b;
fig. 2d shows a rear view of the plate portion in fig. 2b-c;
fig. 3a-c show front, side and rear views of the cover part of the embodiment in fig. 1;
fig. 4 shows a cross-section side view of another embodiment of the electrical installation system installed in an installation wall;
fig. 5 shows a cross-section side view of yet another embodiment of the electrical installation system installed in an installation wall, and
fig. 6 shows a side view of a wall box similar to that of the embodiments in fig. 1 and 4.

### DETAILED DESCRIPTION

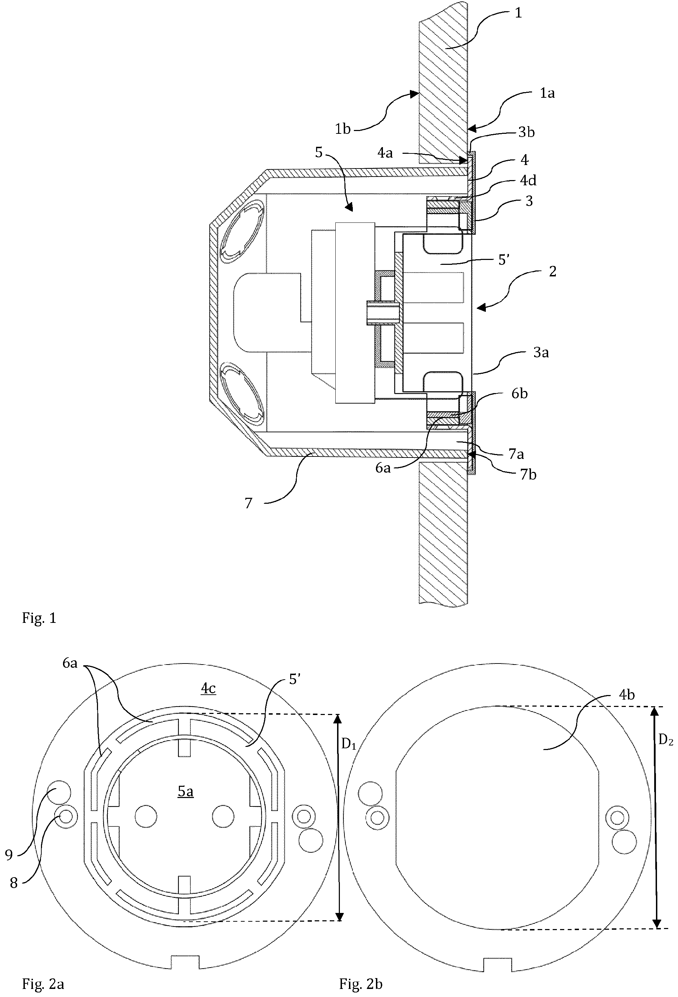

Fig. 1 shows a cross-section side view of an embodiment of the electrical installation system installed in a circular opening of an installation wall 1 having an exterior side 1a and a cavity side 1b, wherein the electrical installation system comprises a main part 2 and a cover part 3.

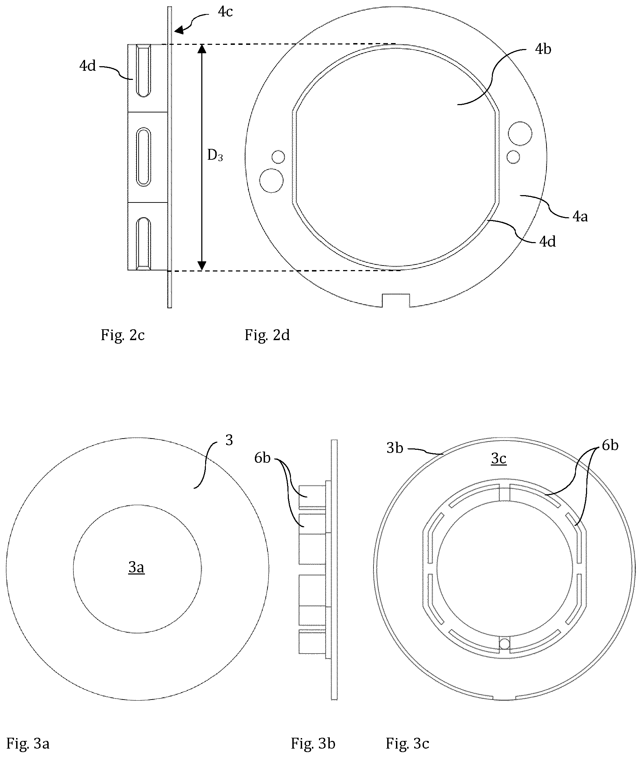

Fig. 2a shows a front view of the main part 2 shown in fig. 1. Fig. 2b shows a front view of the plate portion 4 of the main part 2 shown in fig. 1. Fig. 2c shows a side view of the plate portion in fig. 2b. Fig. 2d shows a rear view of the plate portion in fig. 2b-c.

The main part comprises a plate portion 4 adapted to be fitted with a rear side 4a thereof in abutment with the exterior side 1a of the installation wall (see fig. 1), and an electrical module 5 comprising an electrical receptable being a standard (Schuko) wall socket. The electrical module 5 is fixedly attached to the plate portion in a through opening 4b thereof such that a front side 5a of the electrical module is user-accessible from a front side 4c of the plate portion. The electrical module 5 is electrically insulated at the front side 5a thereof. The electrical insulation is achieved by means of a plastic front portion 5' of the electrical module which is injection or insertion molded to a rearwardly directed flange 4d of the plate portion 4 to be fixedly attached thereto. The flange 4d extends around the through opening 4b (see fig. 2c-d) and substantially perpendicularly relative/from the rear side 4a of the plate portion 4. The electrical (wire) connections are made to the rear portion of the electrical module (behind the plastic front portion 5'). In fig. 2a, the plate portion is shown with the electrical module and its plastic front portion 5' attached thereto, and in fig. 2b, the plate portion is shown without the electrical module. The front side 5a of the electrical module does not protrude beyond said front side 4c of the plate portion. The main part 2 and the cover part 3 are releasably connectable to each other by means of a first fastening mechanism based comprising recesses/grooves 6a in the plastic front portion 5' of the electrical module 5 of the main part 2 and corresponding protrusions 6b on the rear side 3c of the cover part 3. Due to a tight fit between the protrusions 6b and the grooves 6a, friction contact is achieved between the cover part and the main part. Consequently, no screws or snap connections are needed.

Furthermore, due to the electrical insulation of the electrical module, there is no risk of electrical shocks even if the cover part is non-intentionally removed. Since the grooves 6a are in the plastic front portion 5', the fastening mechanism is, as seen in a lateral direction parallel with the plate portion 4, within a lateral extension of the through hole 4b in the plate portion, and thus also within the lateral extension of the wall box. Thus, no additional holes need to be made in the installation wall in order to accommodate the fastening mechanism.

The cover part 3 is substantially plate-shaped and is provided with a through opening 3a for providing user access to the electrical module 5 when the cover part is fitted to the main part.

The electrical installation system further comprises a substantially cylindrical wall box 7 adapted to be arranged in the opening of the installation wall 1 and extending into the cavity side 1b. The wall box comprises a first opening 7a at a front side and is substantially hollow to at least partly receive the electrical module 5 of the main part 2 therein. The main part and the wall box are connectable by a second fastening mechanism 8 in the form of a screw at opposite lateral sides of the plate portion 4 (see fig. 2a). The cylindrical wall box has a diameter which may be approximately 70 mm such as to fit into a 74 mm diameter opening in the installation wall. Other diameters are foreseeable within the scope of the invention.

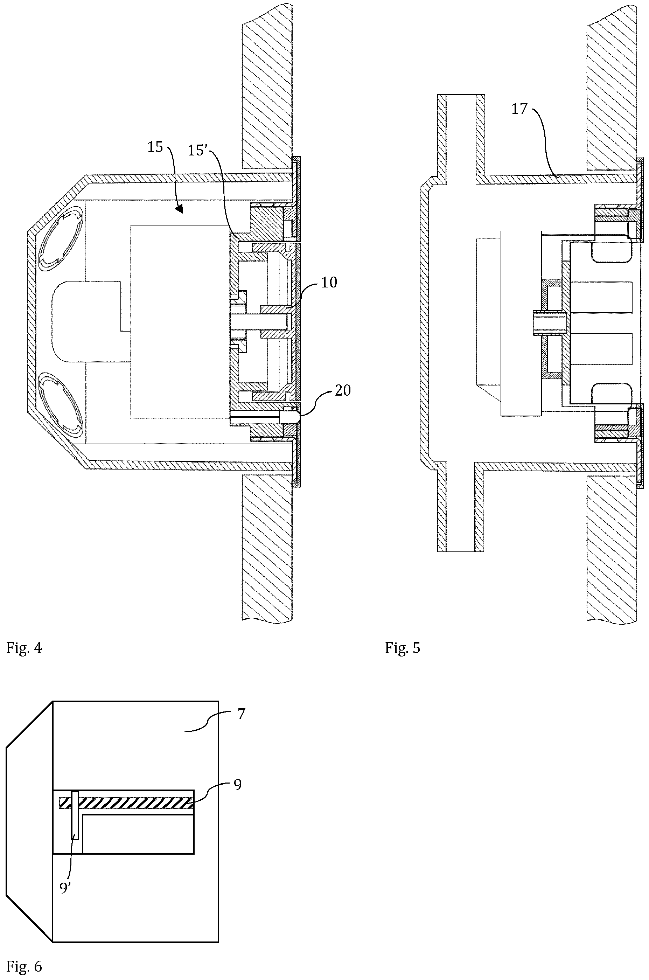

The wall box comprises at least one securing unit 9 (see fig. 6 and the associated description below) adapted to enable prevention of movement of the wall box in a direction towards the exterior side of the installation wall (to the right in fig. 1). The wall box is adapted to be fitted with its front side 7b flush (in line) with the exterior side 1a of the installation wall and to co-act with the plate portion 4 of the main part 2 to prevent movement of the main part and the wall box in a direction towards the cavity side 1b (to the left in fig. 1). Put differently, and as can be seen in fig. 1, unlike conventional wall boxes for retrofitting, the wall box 7 is not provided with any lateral protrusion/flange at a front side 7b of the wall box for abutment against the exterior side 1a of the installation wall. On the contrary, the plate portion 4 acts as the protrusion/flange which, when the plate portion and the wall box are connected, prevents the wall box from moving/falling into the wall (to the left in the figure).

As can be seen in fig. 2a-d, the through opening 4b (and consequently also the flange 4d) is substantially circular in the sense that it is circular except for circle segment-shaped portions at both lateral sides to accommodate the second fastening mechanism 8 and securing unit 9 (and corresponding mechanism/unit at the other lateral side). The first fastening mechanism 6a, 6b is shaped correspondingly, but has a smaller lateral extension than the through opening 4b - as can be seen in fig. 2a-b, the diameter D₁ of the circular portion of first fastening mechanism 6a is smaller than the corresponding diameter D₂ of the through opening 4b. It is understood that lateral extension refers to the extension in a lateral direction being parallel with the front/rear sides 4a/4c of the plate portion. The flange 4d has an outer diameter (lateral extension) of diameter D₃ being smaller than the inner diameter of the wall box 7.

Fig. 3a-c show front, side and rear views of the cover part 3 of the embodiment in fig. 1.

The cover part 3 has a thickness of approximately 2 mm. The cover part has a greater lateral extension (diameter) than the plate portion 4 of the main part 2, and as can be seen also in fig. 1, is provided with a circumferential protrusion 3b on a rear side 3c thereof, the circumferential protrusion 3b surrounding the plate portion 4 when the cover part 3 is connected to the main part 2. The protrusion 3c has a height approximately equal to the thickness of the plate portion 4 such that the protrusion is in abutment with the exterior side 1a of the wall when installed (see fig. 1). Thus, the overall building depth of the electrical installation system is about 2 mm.

Fig. 4 shows a cross-section side view of another embodiment of the electrical installation system installed in an installation wall. This embodiment differs only from the embodiment in fig. 1-3 in that:
- The electrical module 15 is a light dimmer/switch. The plastic front portion 15' of the electrical module is attached to the plate portion in the same manner as described above with reference to fig. 1-3.
- An interaction part in the form of a dimmer knob 10 is arranged on the front side of the electrical module 15 and is connected to a shaft of the light/dimmer switch of the electrical module as can be seen in fig. 4. The interaction part has a diameter adapted to the diameter of the through hole in cover part. The interaction part can extend beyond the front side 4c of the plate portion such as to be arranged flush/in-line with the front side of the cover part.
- The cover part is provided with a through-hole or transparent portion 20 for an indicator light of the electrical module 15.

Fig. 5 shows a cross-section side view of another embodiment of the electrical installation system installed in an installation wall. This embodiment differs only from the embodiment in fig. 1-3 in that it does not comprise the wall box 7. Instead, the electrical installation system has been retrofitted to a previously installed box 17 of the known "apparatus box" type which is typically attached to a beam inside the wall and has standardized dimensions. The main part is connected to the box 17 by screws 8 (at standardized spacing). Correspondingly as the inventive wall box 7, the apparatus box 17 has a first opening at a front side adapted to at least partly receive the electrical module of the main part therein.

Fig. 6 shows a side view of a wall box similar to that in fig. 1 and 4. One of the two securing units/screws 9 are visible (the other is arranged on the opposite side of the wall box). When the securing units 9 are rotated by means of the screw heads accessible from the front side of the main unit (see fig. 2a), the anchor element 9' is displaced towards the cavity side of the installation wall until it makes contact therewith to fixate the (previously interconnected) wall box and main part to the wall.

The description above and the appended drawings are to be considered as non-limiting examples of the invention. The person skilled in the art realizes that several changes and modifications may be made within the scope of the invention. For example, the electrical module does not necessarily need to comprise a receptacle or light switch or dimmer, but may alternatively comprise a display, a light source or an electrical interface. Such electrical modules are all well-known in the art and need not to be disclosed in further detail here. The scope of protection is determined by the appended patent claims.

## Claims

1. An electrical installation system for installation into a substantially circular opening of an installation wall (1) having an exterior side (1a) and a cavity side (1b), wherein the electrical installation system comprises a main part (2) and a cover part (3), wherein the main part comprises:
a plate portion (4) adapted to be fitted with a rear side (4a) thereof in abutment with the exterior side (1a) of the installation wall, and
an electrical module (5; 15) such as at least one of the following: an electrical receptable, a light switch/dimmer, a display, a light source and/or an electrical interface,
wherein the electrical module is fixedly attached to the plate portion in a through opening (4b) thereof such that a front side (5a) of the electrical module is user-accessible from a front side (4c) of the plate portion,
wherein the electrical module (5; 15) comprises electrical insulation (5', 15') arranged to electrically insulate the front side (5a) of the electrical module,
wherein the front side of the electrical module does not protrude beyond said front side (4c) of the plate portion,
wherein the main part (2) and the cover part (3) are releasably connectable to each other by means of a first fastening mechanism (6a, 6b),
wherein the cover part (3) is substantially plate-shaped and is provided with a through opening (3a) for providing user access to the electrical module (5; 15) when the cover part is fitted to said main part, and
wherein the first fastening mechanism (6a, 6b) is arranged, as seen in a lateral direction parallel with the plate portion (4), within a lateral extension of the through hole (4b) in the plate portion.

2. The electrical installation system according to claim 1,
wherein the electrical installation system further comprises a wall box (7) adapted to be arranged in the opening of the installation wall (1) and extending into the cavity side (1b);
wherein the wall box comprises a first opening (7a) at a front side adapted to at least partly receive the electrical module (5; 15) of the main part (2) therein;
wherein the main part and the wall box are connectable by a second fastening mechanism (8); wherein the wall box comprise at least one securing unit (9) adapted to enable prevention of movement of the wall box in a direction towards the exterior side of the installation wall;
wherein the wall box is adapted to be fitted with its front side (7b) flush with the exterior side (1a) of the installation wall and to co-act with the plate portion (4) of the main part (2) to prevent movement of the main part and the wall box in a direction towards the cavity side (1b).

3. The electrical installation system according to claim 2, wherein the wall box (7) is not provided with any lateral protrusion at a front side (7b) of the wall box for abutment against the exterior side (1a) of the installation wall.

4. The electrical installation system according to claim 2 or 3, wherein the wall box (7) is substantially cylindrical.

5. The electrical installation system according to claim 4, wherein the wall box (7) has an outer diameter between 70 and 76 mm.

6. The electrical installation system according to claim 1, wherein the electrical installation system is adapted as to be retrofitted to a previously installed wall box (17) having a first opening at a front side adapted to at least partly receive the electrical module of the main part therein, and wherein the main part (2) is adapted to be connected to the previously installed wall box by a second fastening mechanism (8).

7. The electrical installation system according to any previous claim, wherein the first fastening mechanism (6a, 6b) is adapted so that when the electrical installation system has been installed no screws are visible.

8. The electrical installation system according to claim 7, wherein the first fastening mechanism (6a, 6b) is based on friction contact between the main part (2) and the cover part (3).

9. The electrical installation system according to any previous claim, wherein the main part comprises an interaction part (10) arranged on the front side of the electrical module (15) to co-act with the electrical module, wherein said through opening of the cover part provides access to the interaction part.

10. The electrical installation system according to any previous claim, wherein the cover part (3) has a thickness of 3 mm or less, such as 2 mm or less.

11. The electrical installation system according to any previous claim, wherein the cover part has a greater lateral extension than the plate portion (4) of the main part (2), and is provided with a circumferential protrusion (3b) on a rear side (3c) thereof, the circumferential protrusion (3b) surrounding the plate portion (4) when the cover part (3) is connected to the main part (2).

12. The electrical installation system according to claim 11, wherein said protrusion (3c) has a height approximately equal to or greater than to the thickness of the plate portion (4) such that the protrusion is in abutment with the exterior side (1a) of the wall when installed.

13. The electrical installation system according to any of the preceding claims, wherein the first fastening mechanism is formed by a first fastening portion of the electrical module (5) and a second fastening portion of the cover part (3).

14. The electrical installation system according to claim 13, wherein the first fastening portion comprises one or more recesses or grooves (6a) in a front side of the electrical module (5) and corresponding one or more protrusions (6b) on a rear side (3c) of the cover part (3).
